# FASCICULE DE BREVET EUROPEEN

(11) **EP 0 375 529 B1**
(45) Date de publication et mention de la délivrance du brevet: **03.03.1993**
(21) Numéro de dépôt: 89403521.1
(22) Date de dépôt: 18.12.1989
(51) Int. Cl.: B65G 49/00

(54) **Dispositif pour transporter des produits divers dans un espace de traitement**
Einrichtung zum Transportieren verschiedenartiger Produkte in einem Behandlungsraum
Device for transporting different products within a treatment chamber

(30) Priorité: 19.12.1988 FR 8816752
(43) Date de publication de la demande: 27.06.1990
(73) Titulaire: Société Anonyme dite: ETABLISSEMENTS NOSEDA CALMELS, F-92120 Montrouge (FR)
(72) Inventeur: Schaller, Gérard, F-94460 Santeny (FR)
(74) Mandataire: Caunet, Jean

(56) Documents cités:
- DE-A- 3 024 195
- FR-A- 2 588 837
- FR-A- 2 595 336
- US-A- 2 073 576

## Description

La présente invention concerne un dispositif pour transporter des produits divers, tels que des carrosseries de véhicules automobiles, dans un espace de traitement suivant un cheminement sinueux entre deux niveaux.

Le brevet français n° 2.588.837 décrit un tel dispositif qui comporte deux transporteurs aériens du type particulier dénommé convoyeur, qui prennent les courbes dans deux directions différentes perpendiculaires à leur sens de défilement. Les brins actifs de ces convoyeurs s'étendent de part et d'autre des produits en mouvement et sont munis de perches pivotantes reliées deux à deux en bas, pour un même convoyeur, par un châssis déboîtable s'étendant entre les deux convoyeurs pour supporter au moins un tel produit en l'inclinant dans les parties pentues du cheminement.

Les châssis et les carrosseries automobiles que ceux-ci supportent, s'égouttent après être sortis du bain de traitement et il en est de même pour les perches. Etant donné que ces perches défilent hors de la zone de circulation des carrosseries, elles ne peuvent pas s'égoutter sur les carrosseries. Cela suppose bien sûr que le brin de retour des perches défile également hors de ladite zone. A cet effet, dans le brevet français n° 2.588.837, les convoyeurs sont continus et leurs roues dentées extrêmes sont horizontales de façon que les brins de retour et leurs perches pendantes soient situés à l'extérieur et de part et d'autre des brins actifs encadrant ladite zone de circulation.

L'inconvénient majeur de cette réalisation connue est la trop grande occupation au sol de l'installation dans le sens de la largeur, excès d'occupation qui se retrouve nécessairement en amont et en aval de l'installation de traitement dans la ligne.

La demande de brevet allemand n° 3.024.195 décrit un dispositif de transport qui comporte également deux transporteurs aériens qui prennent les courbes dans une seule direction perpendiculaire à leur sens de défilement. Les brins actifs de ces transporteurs s'étendent de part et d'autre de la zone de circulation des carrosseries automobiles et sont reliés par des arceaux dont les traverses sont destinées à supporter deux à deux des châssis prévus pour recevoir des carrosseries.

L'avantage de ce dispositif connu est que son encombrement en largeur se trouve réduit considérablement par le fait que les transporteurs s'étendent dans des plans verticaux.

Cependant, les brins de retour étant situés sous les brins actifs, il est nécessaire de prévoir des infrastructures coûteuses, étant donné que le passage des brins de retour doit s'effectuer sous le niveau des cuves de traitement. Il ne serait en effet pas possible dans cette réalisation de placer les brins de retour au-dessus des brins actifs, étant donné que les traverses des arceaux de ces brins actifs plongent dans le bain de traitement et s'égouttent dès qu'ils en sortent et durant le retour les égouttures tombent alors sur les carrosseries et nuisent à la qualité du traitement.

Il est intéressant de noter que dans cette réalisation connue, les arceaux des brins de retour situés sous les cuves de traitement sont couchés par une rampe inclinée et un chemin de guidage sur lesquels les traverses des arceaux glissent dans leur partie médiane.

Dans l'hypothèse où les arceaux en retour défileraient au-dessus des carrosseries, la mise en place de la rampe inclinée et du chemin de guidage, selon cette demande de brevet allemand, conduirait à la construction d'une superstructure coûteuse et gênante.

La présente invention a pour but de proposer un dispositif de transport qui, d'une part, ne peut pas générer des égouttures et d'autre part, présente un encombrement minimal en largeur et en hauteur. Par ailleurs, il doit pouvoir être mis en place dans l'installation sans travaux importants dans le sol ou en aérien et libérer complètement l'espace au-dessus de la zone de circulation des carrosseries ; il doit en outre, être facilement automatisable, fiable, sûr et relativement économique.

Dans ce but, le dispositif de l'invention comporte, comme dans la demande de brevet allemand n° 3.024.195, deux transporteurs aériens qui s'étendent dans des plans verticaux de part et d'autre des produits en mouvement et sont munis de perches pivotantes, les perches du brin actif de chaque transporteur étant reliées deux à deux en bas par un châssis déboîtable s'étendant entre les deux transporteurs pour supporter au moins un tel produit en l'inclinant dans les parties pentues du cheminement, les extrémités inférieures des perches étant en outre susceptibles de coopérer avec des rampes inclinées extrêmes reliées par un chemin de guidage disposé sous le brin de retour de chaque transporteur, pour coucher lesdites perches, les maintenir couchées et les redresser, en réduisant ainsi l'encombrement du transporteur considéré avec ses perches. Outre cela, conformément à l'invention :
- le brin de retour de chaque transporteur s'étend au-dessus du brin actif du transporteur considéré,
- et chaque perche présente un décrochement permettant de décaler transversalement au déplacement de la perche considérée, la partie inférieure de celle-ci relativement à la partie supérieure pour qu'aux extrémités de chaque transporteur les perches puissent se coucher en rejoignant le brin de retour ou se redresser en quittant ce brin actif défilant en-dessous.

Suivant une forme de réalisation particulièrement avantageuse, chaque transporteur est du type prenant les courbes dans une seule direction perpendiculaire à son sens de défilement.

Le dispositif comporte sur une partie au moins de son parcours et notamment à un poste de chargement un moyen s'oppposant au pivotement des perches.

L 'extrémité inférieure de chaque perche fait corps avec un tourillon à gorge qui est susceptible de coopérer avec l'un des quatre crochets à nervure saillante interne de l'un quelconque des châssis porteurs pour assurer la suspension du châssis sélectionné pendant le parcours seulement.

Chaque crochet de suspension d'un châssis porteur comporte un organe escamotable commandé automatiquement pour son verrouillage sur un tourillon de perche, par la descente du châssis considéré à un poste de chargement et pour son déverrouillage du tourillon considéré, par une rampe inclinée fixe située à un poste de déchargement.

Chaque transporteur comportant une chaîne sans fin qui s'étend entre deux rails fixes prévus pour le guidage de galets montés fous autour d'axes reliant les maillons de la chaîne, les chaînes sont enroulées sur deux paires de roues dentées, de même diamètre, un moyen d'entraînement en rotation et un moyen de tension coopérant avec l'une au moins de ces paires de roues, et chaque perche comporte deux éléments dont les longueurs sont sensiblement égales et inférieures au diamètre des roues et qui sont réunis par une entretoise transversale plaçant l'élément inférieur, lorsque la perche considérée franchit au poste de déchargement la paire de roues dentées, hors de rencontre avec l'élément supérieur de la perche qui arrive à ce poste par le brin inférieur actif du transporteur correspondant et, lorsque la perche considérée franchit au poste de chargement la paire de roues dentées, hors de rencontre avec l'élément supérieur de la perche qui part de ce poste par le brin inférieur actif du transporteur correspondant.

Chaque tourillon comporte une saillie située en retrait de l'élément inférieur de la perche correspondante, du même côté que cet élément inférieur relativement à l'élément supérieur, cette saillie étant destinée à reposer en glissant sur les rampes inclinées extrêmes pour coucher et redresser la perche considérée; lorsqu'elle y parvient, ainsi que sur le chemin de guidage qui relie ces rampes, pour maintenir la perche couchée.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin :
- la figure 1 est une coupe schématique d'une installation de cataphorèse faisant application du dispositif de l'invention,
- la figure 2 est une vue en plan prise suivant la ligne II-II de la figure 1, en travers du tunnel et concernant seulement les transporteurs,
- la figure 3 est une coupe transversale du dispositif prise au poste de déchargement à plus grande échelle suivant la ligne III-III de la figure 1, avec des perches aux points haut et bas des roues dentées d'entraînement des convoyeurs,
- la figure 4 est une élévation-coupe longitudinale prise à plus grande échelle suivant la ligne IV-IV de la figure 1,
- la figure 5 est une élévation prise suivant la ligne V-V de la figure 4, le rail extérieur et sa cage étant enlevés.
- la figure 6 est une élévation d'un châssis porteur,
- la figure 7 est une vue en plan de dessus de ce châssis,
- la figure 8 est une coupe prise à plus grande échelle suivant la ligne VIII-VIII de la figure 7, lorsque le châssis est au poste de chargement en position haute en attente de prise en charge par deux perches,
- la figure 9 est une coupe prise suivant la ligne IX-IX de la figure 8,
- les figures 10 et 11 sont des vues analogues aux figures 8 et 9, lorsque le châssis est en position intermédiaire de chargement,
- les figures 12 et 13 sont des vues analogues aux figures 8 et 9, lorsque le châssis est en position basse de chargement verrouillée,
- les figures 14 et 15 sont des vues analogues aux figures 12 et 13, lorsque le châssis est au poste de déchargement en position basse déverrouillée,
- les figures 16 et 17 sont des vues analogues aux figures 14 et 15, lorsque le châssis est en position haute déverrouillée de déchargement,
- la figure 18 est une vue analogue à la figure 1 concernant une installation d'étuvage faisant également application du dispositif de l'invention.

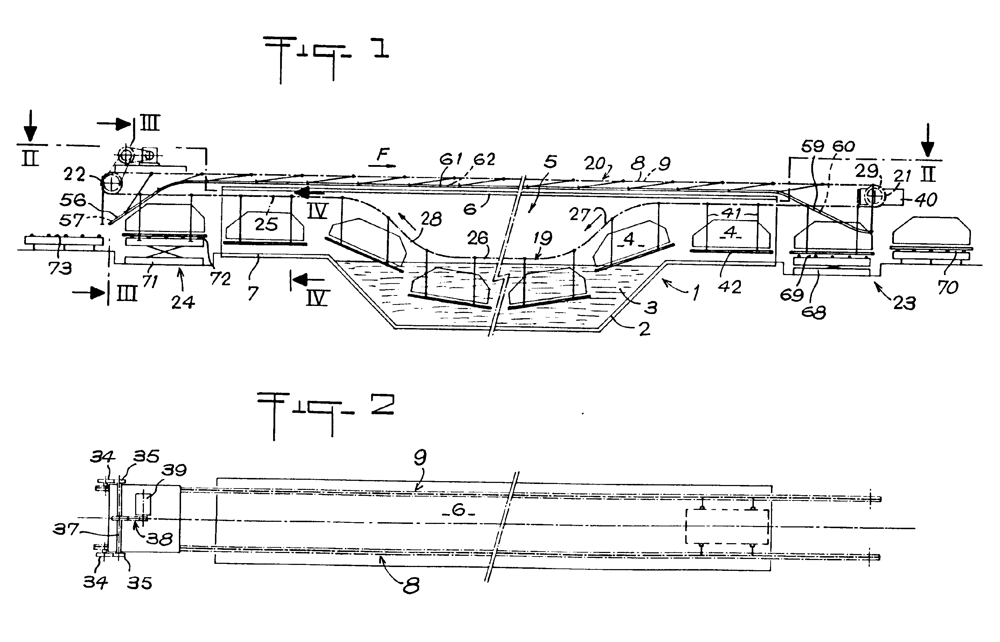

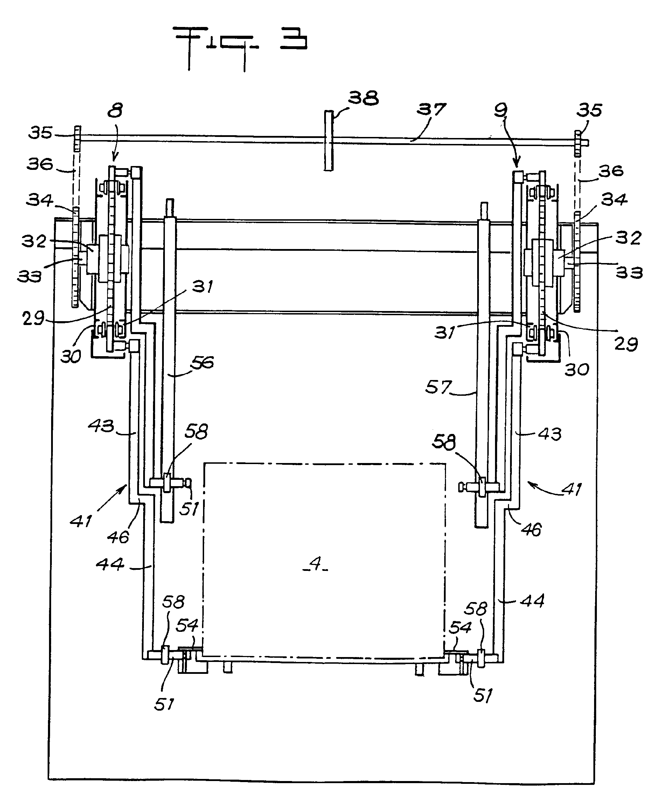

Le dispositif, objet de l'invention, peut être appliqué à une installation de cataphorèse 1 (figures 1 et 2) qui comprend au moins une cuve de traitement 2 contenant un produit liquide 3 destiné à se déposer sur des carrosseries automobiles 4 circulant en continu et plongeant dans le bain grâce à ce dispositif. La cuve 2 est intégrée dans un tunnel 5 dont le plafond 6 et le fond 7 sont sensiblement horizontaux.

Ainsi que cela ressort des figures 1 à 7, le dispositif de transport comporte deux transporteurs aériens 8 et 9 s'étendant de part et d'autre de la file de carrosseries 4 qui cheminent.

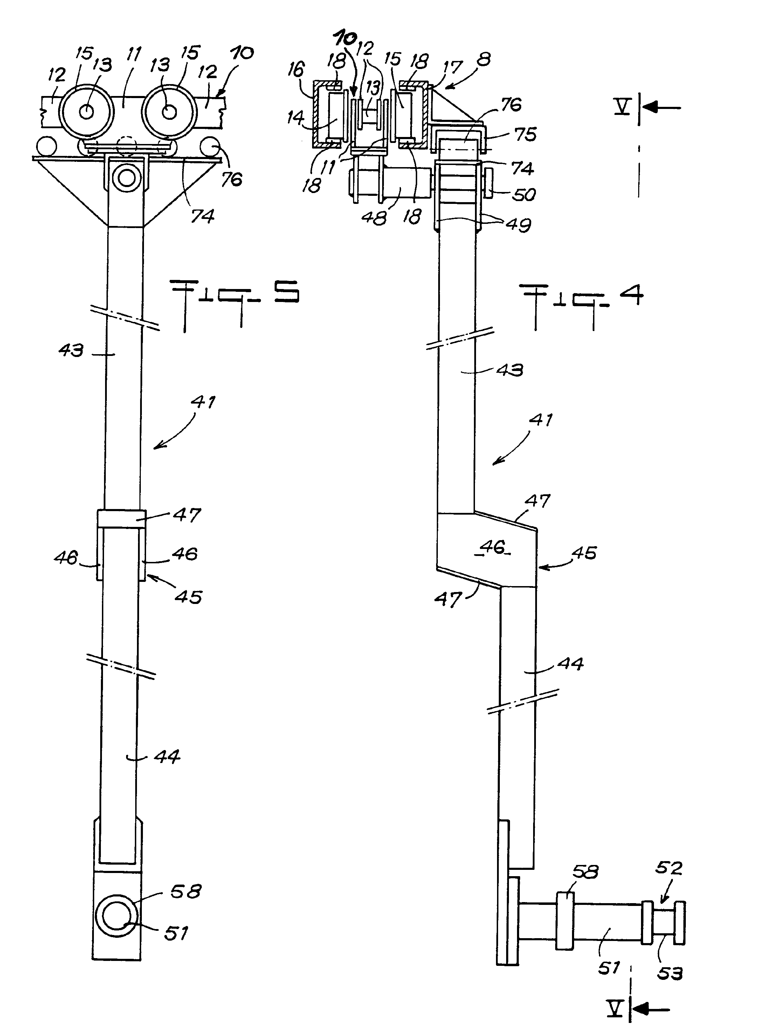

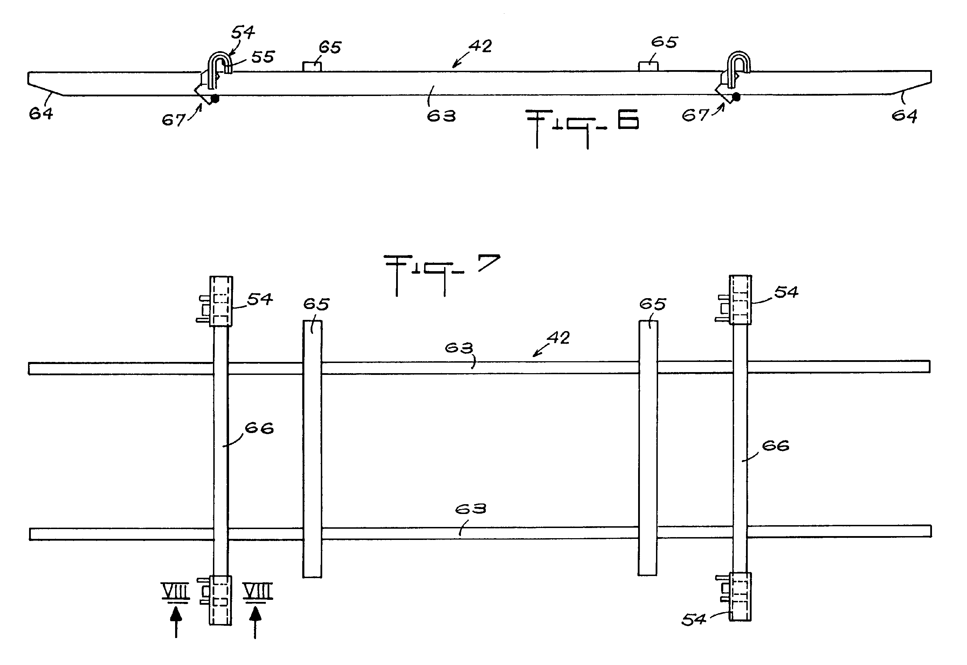

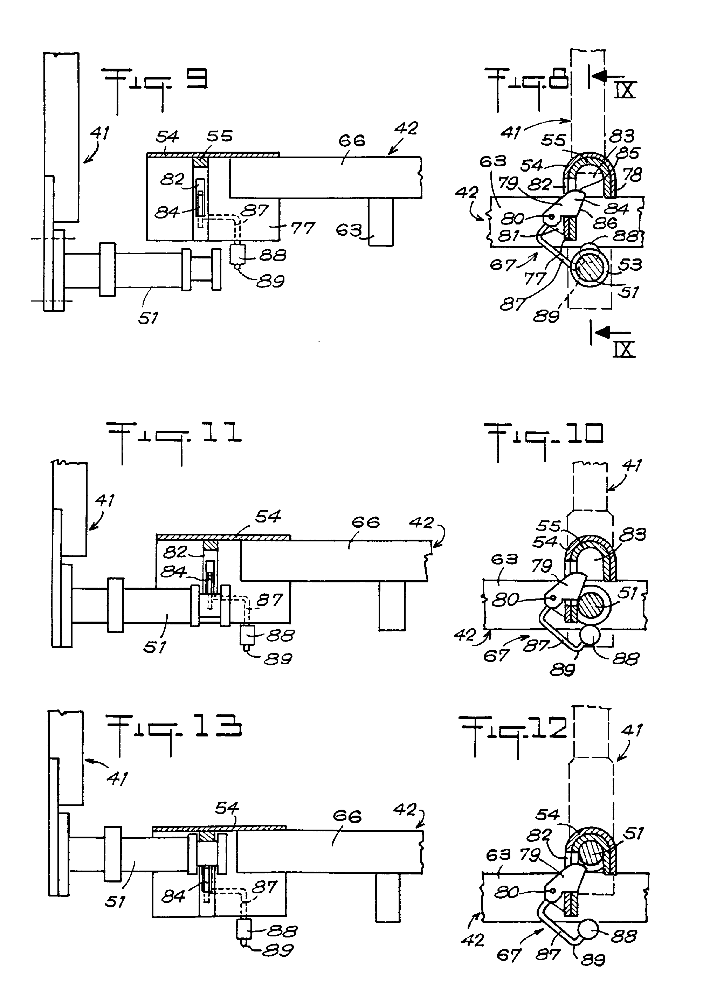

Comme le montrent les figures 4 et 5, chacun des transporteurs 8, 9 est constitué par une chaîne sans fin 10 dont des maillons larges 11 sont articulés sur des maillons étroits 12 au moyen d'axes 13 qui les traversent. Des galets à collerettes 14 et 15 sont montés fous sur les deux extrémités saillantes des axes et sont logés dans des rails de guidage 16 et 17 profilés en C et munis de bandes de roulement supérieure et inférieure 18 qui assurent le guidage de la chaîne en haut, en bas et sur les côtés. Les rails 16 et 17 sont situés de part et d'autre de la chaîne 10 et sont conformés en correspondance avec le cheminement de la chaîne considérée.

Dans l'installation selon la figure 1, chaque chaîne 10 présente un brin inférieur actif 19 et un brin supérieur de retour 20 reliés entre eux par des parties arquées de renvoi 21 et 22 situées respectivement en amont d'un poste de chargement 23 et en aval d'un poste de déchargement 24. Le brin supérieur de retour 20 est sensiblement horizontal et s'étend au-dessus du plafond 6 du tunnel. Le brin inférieur actif 19 est sinueux pour faire plonger dans le bain 3 les carrosseries 4 suspendues aux chaînes 10, les y déplacer et les faire émerger ; à cet effet, le brin 19 comporte des parties horizontales supérieures 25 et inférieure 26 reliées par des parties pentues descendante 27 et montante 28.

Comme cela est illustré par les figures 1 à 3, les parties arquées de renvoi 22 des transporteurs 8, 9 sont générés par deux roues dentées 29 engrenant avec les chaînes 10 desdits transporteurs et interposées chacune entre deux cages semi-circulaires 30 et 31 prolongeant les rails 16 et 17 des brins 19 et 20. Ces cages 30, 31 et des paliers 32 supportant l'arbre 33 de chaque roue dentée 29 sont montés sur la structure fixe de l'installation. Chaque arbre 33 est relié par une transmission, à pignons 34, 35 et chaîne 36 par exemple, à un arbre menant 37 s'étendant transversalement et lui-même relié dans sa zone médiane par une autre transmission 38 à un groupe motoréducteur 39.

Les parties arquées de renvoi 21 des transporteurs 8, 9 sont générées de la même façon, mais leurs roues dentées 29 sont folles. Par ailleurs, les paliers 32 de ces roues et les cages 30, 31 sont fixés sur un chariot tendeur 40 guidé le long d'une glissière de la structure fixe de l'installation et assujetti à un moyen de traction tel qu'un contrepoids, un ressort, un vérin ou autre ; ainsi, le chariot 40 maintient les chaînes 10 des transporteurs 8, 9 sous tension.

Les figures 1 à 7 montrent que des perches 41 sont suspendues aux chaînes 10 des transporteurs 8, 9 de façon à pouvoir pivoter dans le plan vertical de ceux-ci. Ainsi, les perches peuvent rester verticales même si les chaînes s'inclinent.

Par ailleurs, les extrémités inférieures de chaque paire de perches 41 sont articulées, en étant déboîtables, sans des châssis porteurs 42 destinés à recevoir les carrosseries 4.

Ainsi, les perches 41 et les châssis 42 forment des balancelles stables qui suivent, sans engendrer de contraintes excessives dans les transporteurs 8, 9, les parties pentues 27 et 28 des brins actifs 19 de ces transporteurs.

Dans l'exemple représenté sur les figures 3 à 5, chaque perche 41 est constituée par deux éléments 43 et 44 dont les longueurs respectives sont sensiblement égales et légèrement inférieures au diamètre des roues dentées identiques 29 des parties arquées de renvoi 21 et 22 des transporteurs 8, 9. Ces éléments 43 et 44 sont réunis rigidement par une entretoise transversale 45 constituée par des plaques verticales 46 et des plaques inclinées 47, bouchant les extrémités des tubes formant lesdits éléments. Cette entretoise permet de décaler, transversalement au déplacement des perches, les éléments l'un par rapport à l'autre d'une distance supérieure à leur grosseur.

Dans l'exemple illustré par la figure 3, l'élément supérieur 43 s'étend sur le côté intérieur du transporteur correspondant et l'élément inférieur est plus éloigné de celui-ci que ledit élément supérieur. Ainsi, lorsqu'une perche 41 franchit, après le poste de déchargement 24, une roue dentée 29 de la partie arquée de renvoi 22, son élément inférieur 44 ne peut pas rencontrer l'élément supérieur 43 de la perche qui arrive à ce poste par le brin inférieur actif 25 des transporteurs ; de même, lorsqu'une perche 41 franchit, au voisinage du poste de chargement 23 une roue dentée 29 de la partie arquée de renvoi 21, son élément inférieur 44 ne peut pas rencontrer l'élément supérieur 43 de la perche qui part de ce poste par ledit brin actif 25.

Si l'on considère plus précisément les figures 4 et 5, on constate qu'en haut, chaque perche 41 est montée pivotante par rapport à un maillon large 11 de la chaîne correspondante. En effet, ce maillon fait corps avec un tourillon 48 s'étendant parallèlement aux axes 13 de ladite chaîne ; sur ce tourillon épaulé est enfilé librement un embout extrême 49 de l'élément supérieur 43 de la perche 41 considérée ; une butée démontable 50 est fixée sur l'extrémité du tourillon pour empêcher la perche de se déboîter.

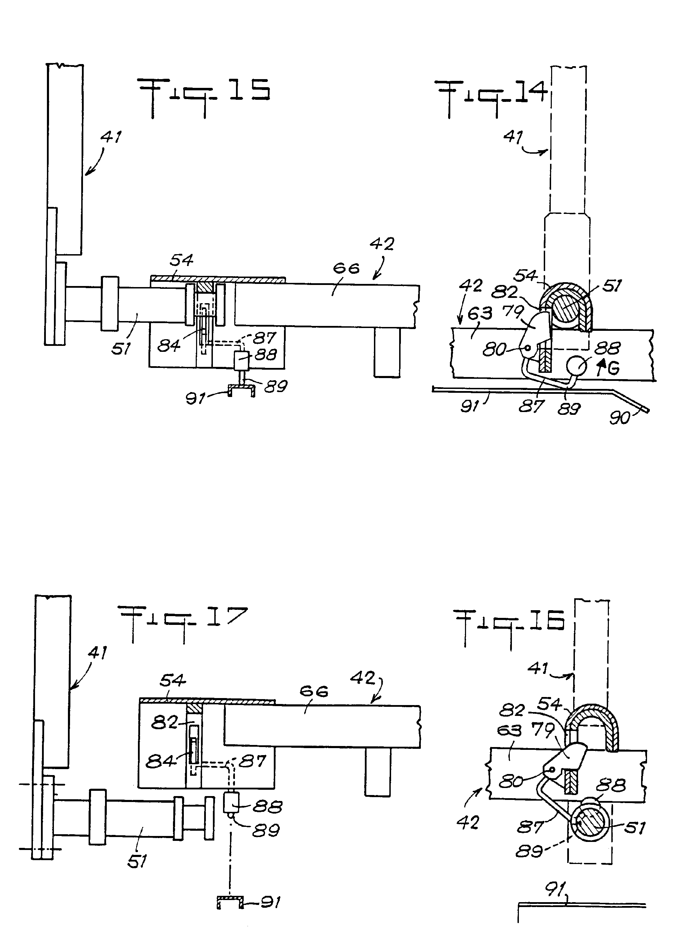

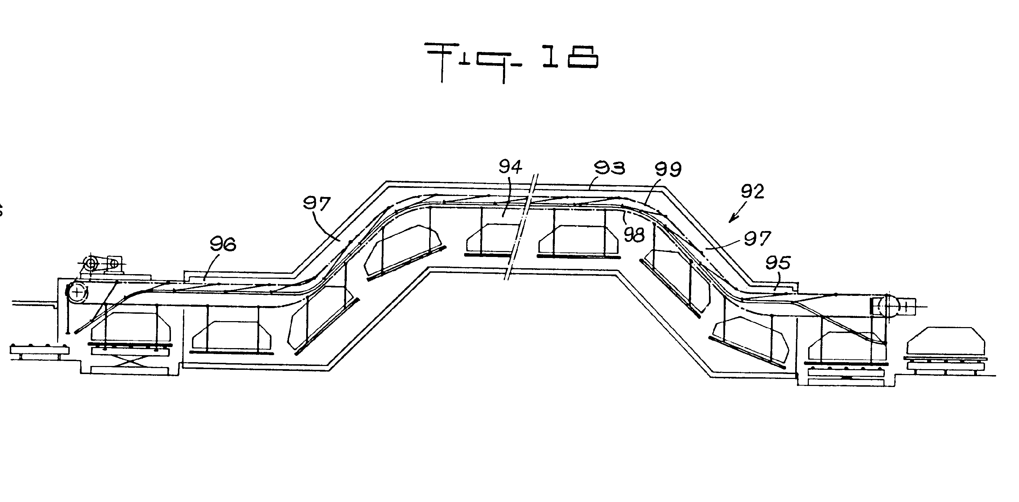

On constate également qu'en bas, chaque perche 41 fait corps avec un tourillon 51 s'étendant parallèlement aux axes 13 de la chaîne considérée et vers l'intérieur. L'extrémité libre 52 du tourillon est cylindrique et présente une gorge 53, pour pouvoir pivoter dans un crochet de suspension 54 ayant une nervure saillante interne 55 dont la section est complémentaire de celle de la gorge, ce crochet faisant corps, comme cela est décrit dans ce qui suit en se référant aux figures 6 et 7, avec un châssis porteur 42.

Ainsi que cela ressort des figures 1 et 3, des moyens sont mis en oeuvre pour coucher les perches 41 du brin de retour 20 des transporteurs 8, 9 et les maintenir couchées, ce qui permet de réduire la hauteur du dispositif transporteur et de l'installation équipée de celui-ci. Ces moyens comportent :
- à l'aplomb du poste de déchargement 24, des rampes inclinées 56 et 57 destinées à coopérer avec des saillies 58 faisant corps avec les tourillons inférieurs 51 des perches 41 des transporteurs 8 et 9 respectivement, ces saillies étant situées, comme les rampes inclinées par conséquent, entre lesdits éléments inférieurs 44 des perches et les extrémités 52 desdits tourillons. L'extrémité inférieure des rampes 56 et 57 est disposée en retrait de la perche qui pend des roues dentées 29 au plus loin et sensiblement au niveau du tourillon 51 de cette perche. Les rampes 56 et 57 sont montantes dans le sens de la flèche F du retour et provoquent, lorsque les tourillons supérieurs 48 des perches 41 défilent et que les tourillons inférieurs 51 de celles-ci glissent en les gravissant sur lesdites rampes, un pivotement desdites perches tendant à coucher ces perches (figure 1).
- à l'aplomb du poste de chargement 23, des rampes inclinées 59 et 60 qui sont descendantes dans le sens de la flèche F du retour et provoquent, en coopérant avec les saillies 58 des tourillons inférieurs 51 des perches 41 le redressement de celles-ci. Ces rampes 59 et 60 s'incurvent à leur extrémité libre pour parvenir au niveau de la perche qui pend en haut des roues dentées 29 des parties de renvoi 21 des transporteurs 8 et 9. Lorsque les perches franchissent ces parties 21, elles pendent verticalement sans osciller,
- entre les rampes 56 et 59, 57 et 60, des chemins de guidage 61, 62 reliant lesdites rampes et maintenant, par coopération avec les saillies 58, les perches couchées. Bien entendu, les chemins 61 et 62 sont situés au-dessus du plafond 6 du tunnel 5.

Dans l'exemple représenté sur les figures 6 et 7, chaque châssis porteur 42 comporte deux longerons 63 dont les extrémités 64 sont relevées pour faciliter leur déplacement sur des rouleaux. Les longerons 63 sont reliés par des traverses 65 afin de former une structure rigide apte à supporter une carrosserie automobile 4 ou autre produit, laquelle y est fixée pour tout moyen démontable approprié. Ces longerons font corps avec deux traverses tubulaires 66 dont l'écartement correspond à la distance qui sépare d'un même côté deux perches 41 conjuguées de suspension. Sur chaque extrémité de traverse 66 est soudé un crochet 54 conformé en U et ouvert en bas. Ce crochet avec nervure interne saillante 55 est destiné à coiffer l'extrémité 52 à gorge 53 d'un tourillon inférieur 51 d'une perche de suspension 41.

Par ailleurs, chaque crochet est muni à l'avant d'un organe escamotable de verrouillage 67 dont l'intervention est commandée automatiquement pour provoquer le verrouillage par l'abaissement du châssis 42 relativement aux perches 41 et, pour provoquer le déverrouillage, par le soulèvement dudit châssis.

Cet organe 67 est décrit dans ce qui suit en se référant aux figures 8 à 17.

Auparavant, il est utile d'évoquer les moyens mis en oeuvre dans l'installation en amont et en aval du dispositif de transport décrit dans ce qui précède.

Ces moyens sont schématisés sur la figure 1. Ils comportent ;
- au poste de chargement 23, une table élévatrice 68 équipée de chemins de roulement automoteurs 69. Cette table est susceptible d'occuper trois niveaux : un niveau supérieur coïncidant avec celui d'un transporteur à rouleaux 70 d'alimentation par lequel les châssis 42 chargés de carrosseries 4 sont successivement amenés, un niveau inférieur auquel les châssis pris en charge par les perches 41 ne repose plus sur les chemins 69 et un niveau intermédiaire auquel la prise en charge s'effectue,
- au poste de déchargement 24, une table élévatrice 71 équipée de chemins de roulement automoteurs 72. Cette table est susceptible d'occuper deux niveaux : un niveau supérieur coïncidant avec celui d'un transporteur à rouleaux 73 d'évacuation par lequel les châssis 42 décrochés des perches 41 sont transférés et un niveau inférieur auquel tout châssis pris en charge par les perches 41 ne repose pas sur les chemins 72.

Il est également utile d'évoquer les moyens mis en oeuvre sur les transporteurs 8, 9 pour s'opposer au pivotement des perches 41 lorsqu'elles circulent au poste de chargement 23 notamment.

Comme le montrent les figures 4 et 5, l'embout 49 de l'élément supérieur 43 de toutes les perches 41 fait corps avec une platine longitudinale 74 s'étendant perpendiculairement à cet élément. Au poste de chargement 23, le rail profilé 17 fait corps avec une cage linéaire 75 dans laquelle sont montés fous des rouleaux 76 définissant une enveloppe plane de portée s'étendant parallèlement audit rail. Ainsi, lorsqu'une perche 41 défile au poste de chargement 42, sa platine 74 circule sur les rouleaux 76 et cette perche ne pouvant plus pivoter est rigoureusement liée au transporteur correspondant.

Si l'on se réfère maintenant aux figures 8 à 17, on constate que chaque crochet 54 est un profilé en U ouvert en bas et soudé sur une extrémité d'une traverse tubulaire 66 d'un châssis porteur 42 ; ce crochet présente une aile antérieure haute 77 et une aile postérieure basse 78, dont la différence des hauteurs est telle qu'à la position intermédiaire de la table 68, les tourillons 51 des perches peuvent passer sous les ailes basses 78 des crochets du châssis 42 reposant sur cette table, mais sont arrêtés par les ailes hautes 77 desdits crochets (figures 10 et 11).

Considérant chaque crochet de suspension 54, l'organe de verrouillage 67 est constitué par un levier 79 monté pivotant autour d'un axe 80 d'une chape extérieure 81 du crochet considéré. Le levier traverse une lumière 82 ménagée dans l'aile haute 77 dudit crochet et dans la nervure 55 faisant corps avec celui-ci. Ce levier 70 débouche dans un logement en U 83 par un bec 84 délimité par une came supérieure de verrouillage 85 et une rampe inclinée inférieure d'escamotage 86, le logement étant destiné à recevoir un tourillon 51 de perche et à être fermé par la came 85 pour verrouiller le crochet 54 sur le tourillon 51 et donc le châssis 42 sur des perches 41.

Par ailleurs, le levier 79 est prolongé au-delà de l'axe 80 par une tige 87 conformée en C et munie en bout, du côté de ce levier, d'un contrepoids d'équilibrage 88. Ce contrepoids tend toujours à faire saillir le bec 84 du levier, dans le logement 83. Enfin, la tige 87 présente un coude inférieur 89 destiné à coopérer avec une rampe inclinée 90 (figure 14) prolongée par un chemin horizontal d'appui 91. Cette rampe et ce chemin sont fixés au poste de déchargement 24 à un niveau tel qu'ils provoquent, lorsqu'un châssis 42 suspendu à des perches 41 parvient à ce poste, le pivotement du levier 79 dans le sens de la flèche G (figure 14) pour dégager le bec 84 du logement 83 en permettant ainsi, lorsque la table élévatrice 71 passe du niveau inférieur (figures 14 et 15) au niveau supérieur (figures 16 et 17), de libérer lesdites perches qui peuvent alors poursuivre leur chemin.

Ainsi que cela ressort notamment de la figure 9, la tige 87 est déviée latéralement pour échapper au tourillon 51 lorsque le crochet 54 le coiffe.

L'automatisme du chargement est illustré par les figures 8 à 13 et décrit ci-après.

Les figures 8 et 9 montrent que la table 68 est à son niveau supérieur en prolongement du transporteur d'alimentation 70 et soutient un châssis 42 dont les leviers 79 verrouillent les crochets 54. Les perches 41 défilent rigidement (leurs platines 74 circulant sur les chemins fixes de roulement 75, 76) et leurs tourillons 51 passent sous les ailes hautes 77 des crochets.

Un premier microcontact est positionné sur le rail 17 pour provoquer, lorsque la perche avant est parvenue entre les crochets antérieurs et postérieurs, l'abaissement de la table 68 jusqu'à son niveau intermédiaire.

Les figures 10 et 11 montrent qu'à ce niveau intermédiaire, les tourillons 51 peuvent passer sous les ailes basses 78 des crochets mais butent contre les ailes hautes 77 de ces crochets.

Un deuxième microcontact est positionné sur le rail 17 pour provoquer, d'une part, l'abaissement de la table 68 jusqu'à son niveau inférieur lorsque la butée précitée s'opère et, d'autre part, le débrayage des rouleaux 69 de la table de façon que le châssis chargé 42 soit entraîné par les perches 41 (butée des ailes 77 contre les tourillons 51) si elles sont assez rigides et les accompagne ou bien la synchronisation des vitesses de translation des perches et des rouleaux. Ainsi, pendant la descente du châssis 42, les crochets 54 s'emboîtent très précisément sur les tourillons 51 ; lors de cet emboîtement, chaque tourillon 51 intervient sur la rampe inclinée 86 du levier 79 pour effacer le bec 84 et se place dans le logement 83, le contrepoids 88 correspondant provoquant alors l'engagement automatique du bec et le verrouillage du tourillon.

Dans cette position, le châssis chargé 42 est suspendu à quatre perches 41 et s'étend au-dessus de la table 68 amenée à son niveau inférieur.

L'automatisme du déchargement est schématisé sur les figures 14 à 17.

Les figures 14 et 15 montrent qu'un châssis chargé 42 parvenant au poste de déchargement 24 se déverrouille de ses quatre perches 41, mais reste suspendu à celles-ci. En effet, les coudes inférieurs 89 des leviers 79 des quatre crochets 54 passent en défilant sur les rampes inclinées fixes 90 et les chemins d'appui 91, ce qui provoque le pivotement des leviers dans le sens de la flèche G et l'effacement des becs 86.

Un microcontact convenablement positionné sur le rail 17 commande le soulèvement de la table 71 jusqu'à ce que ses chemins de roulement 72 parviennent au niveau du transporteur d'évacuation 73. Dans cette position, le châssis chargé 42 est décroché des perches 41 qui continuent à défiler.

Dans le même temps, les rouleaux sont entraînés et évacuent ce châssis.

Le dispositif de transport, objet de l'invention, est décrit dans ce qui précède pour l'installation de cataphorèse 1 illustrée par la figure 1.

Il est également applicable à une installation d'étuvage en baldaquin connue sous le nom de "canopy". Une telle installation 92 est représentée sur la figure 18 et comporte un tunnel 93 conformé en oméga trapézoïdal dont la partie haute 94 est reliée au sas d'entrée 95 et au sas de sortie 96 par des parties pentues 97.

Dans ce cas, le dispositif de transport est identique à celui décrit dans ce qui précède, à la seule différence près que son brin actif 98 et son brin de retour 99 s'insérant dans le tunnel sont sensiblement équidistants l'un de l'autre et conformés, comme ledit tunnel, en oméga trapézoïdal.

## Revendications

1. Dispositif pour transporter des produits divers, tels que des carrosseries de véhicules automobiles, dans un espace de traitement suivant un cheminement sinueux entre deux niveaux, ce dispositif comportant deux transporteurs aériens (8, 9) qui s'étendent dans des plans verticaux de part et d'autre des produits (4) en mouvement et sont munis de perches pivotantes (41), les perches du brin actif (19) de chaque transporteur étant reliées deux à deux en bas par un châssis déboîtable (42) s'étendant entre les deux transporteurs pour supporter au moins un tel produit en l'inclinant dans les parties pentues (27, 28) du cheminement, les extrémités inférieures des perches (41) étant en outre susceptibles de coopérer avec des rampes inclinées extrêmes (56, 57 ; 59, 60) reliées par un chemin de guidage (61 ; 62) disposé sous le brin de retour (20) de chaque transporteur, pour coucher lesdites perches, les maintenir couchées et les redresser, en réduisant ainsi l'encombrement du transporteur considéré avec ses perches,
caractérisé en ce que :
- le brin de retour (20) de chaque transporteur (8, 9) s'étend au-dessus du brin actif (19) du transporteur considéré,
- et chaque perche (41) présente un décrochement (46) permettant de décaler transversalement au déplacement de la perche considérée, la partie inférieure (44) de celle-ci relativement à la partie supérieure (43) pour qu'aux extrémités de chaque transporteur les perches puissent se coucher en rejoignant le brin de retour (20) ou se redresser en quittant ce brin, sans rencontrer les perches du brin actif (19) défilant en-dessous.

2. Dispositif selon la revendication 1, caractérisé en ce que chaque transporteur est du type prenant les courbes dans une seule direction perpendiculaire à son sens de défilement.

3. Dispositif selon la revendication 1, caractérisé en ce que l'extrémité inférieure de chaque perche (41) fait corps avec un tourillon (51) à gorge (53) qui est susceptible de coopérer avec l'un des quatre crochets (54) à nervure saillante interne (55) de l'un quelconque des châssis porteurs (42) pour assurer la suspension du châssis sélectionné perdant le parcours seulement.

4. Dispositif selon la revendication 3, caractérisé en ce que chaque crochet de suspension (54) d'un châssis porteur (42) comporte un organe escamotable (67) commandé automatiquement pour son verrouillage sur un tourillon (51) de perche (41), par la descente du châssis considéré à un poste de chargement (23) et pour son déverrouillage du tourillon considéré, par une rampe inclinée fixe (90) située à un poste de déchargement (24).

5. Dispositif selon la revendication 4, caractérisé en ce que l'organe escamotable de verrouillage (67) est un levier (79) articulé (en 80) sur chaque crochet de suspension (54) et traversant une lumière (82) de celui-ci pour déboucher dans son logement en U (83) par un bec (84) qui présente une rampe inclinée inférieure d'escamotage (86) susceptible de coopérer au poste de chargement avec un tourillon (51) et une came supérieure de verrouillage (85) susceptible de fermer le logement, le levier étant prolongé par une tige (87) conformée en C et munie d'un contrepoids d'équilibrage (88) tendant à faire saillir le bec (84) dans le logement, cette tige étant en outre susceptible de coopérer, au poste de déchargement (24) pour l'effacement du bec, avec la rampe inclinée fixe précitée (90).

6. Dispositif selon la revendication 5, caractérisé en ce qu'il coopère avec des tables élévatrices (68, 71) équipées de chemins de roulement automoteurs (69, 71) et situés au poste de chargement (23) et au poste de déchargement (24), la table élévatrice (68) du poste de chargement (23) ayant une position intermédiaire dans laquelle le tourillon (51) de chaque perche (41) passe sous l'aile arrière (78) de chacun des crochets (54) du châssis porteur se trouvant à ce poste mais rencontre l'aile avant plus haute (77) du crochet considéré.

7. Dispositif selon la revendication 1, caractérisé en ce qu'il comporte sur une partie au moins de son parcours et notamment à un poste de chargement (23) un moyen s'opposant au pivotement des perches (41).

8. Dispositif selon les revendications 6 et 7, caractérisé en ce que le moyen s'opposant au pivotement des perches (41) est constitué par une platine longitudinale (74) s'étendant perpendiculairement à chaque perche avec laquelle elle fait corps, la platine coopérant avec un chemin fixe de roulement (75, 76).

9. Dispositif selon la revendication 3, dans lequel chaque transporteur (8, 9) comporte une chaîne sans fin (10) s'étendant entre deux rails fixes (16, 17) prévus pour le guidage de galets (14, 15) montés fous autour d'axes (13) reliant les maillons (11, 12) de la chaîne, caractérisé en ce que les chaînes (10) sont enroulées sur deux paires de roues dentées (29) de même diamètre, un moyen d'entraînement en rotation (34 à 39) et un moyen de tension (40) coopérant avec l'une au moins de ces paires de roues, et en ce que chaque perche (41) comporte deux éléments (43, 44) dont les longueurs sont sensiblement égales et inférieures au diamètre des roues (29) et qui sont réunis par une entretoise transversale (46) plaçant l'élément inférieur (44), lorsque la perche considérée franchit au poste de déchargement (24) la paire de roues dentées, hors de rencontre avec l'élément supérieur (43) de la perche qui arrive à ce poste par le brin inférieur actif (19) du transporteur correspondant et, lorsque la perche considérée franchit au poste de chargement (23) la paire de roues dentées, hors de rencontre avec l'élément supérieur (43) de la perche qui part de ce poste par le brin inférieur actif du transporteur correspondant.

10. Dispositif selon la revendication 9, caractérisé en ce que chaque tourillon (51) comporte une saillie (58) située en retrait de l'élément inférieur (44) de la perche (41) correspondante, du même côté que cet élément inférieur relativement à l'élément supérieur (43), cette saillie étant destinée à reposer en glissant sur les rampes inclinées extrêmes (56, 57, 59, 60) pour coucher et redresser la perche considérée lorsqu'elle y parvient, ainsi que sur le chemin de guidage (61, 62) qui relie ces rampes, pour maintenir la perche couchée.

11. Dispositif selon l'une quelconque des revendications 1 à 10, caractérisé en ce que chaque châssis porteur (42) comporte au moins deux longerons (63) à extrémités relevées (64), destinés à reposer sur les moyens de transport à rouleaux de l'installation faisant application du dispositif, ces longerons étant reliés par au moins deux traverses (66) dont les extrémités sont équipées des crochets précités de suspension (54).

12. Dispositif selon l'une quelconque des revendications 1 à 11, caractérisé en ce que l'installation faisant application de ce dispositif comporte au moins une cuve de traitement (2) dans laquelle les produits transportés (4) doivent être plongés et en ce qu'au moins le brin actif (19) des transporteurs (8, 9) traverse cette installation de façon que les parties pentues (27, 28) du cheminement induit par ce brin actif fassent plonger les châssis et les produits qu'ils portent, tels que des carrosseries de véhicules automobiles, dans le bain (3) de la cuve (2) et les en fassent ressortir, les perches (41) circulant toujours hors de l'espace dans lequel les produits cheminent et de son prolongement vertical au-dessus.

13. Application du dispositif selon l'une quelconque des revendications 1 à 11, à une installation de cataphorèse (1), caractérisée en ce que le brin actif (19) des transporteurs (8, 9) s'étend dans le tunnel (5) de l'installation en suivant à distance le fond (7) de celui-ci ainsi que le fond d'au moins une cuve (2) de traitement, tandis que le brin de retour (20) des transporteurs s'étend à l'extérieur du tunnel (5) au-dessus de son plafond (6).

14. Application du dispositif selon l'une quelconque des revendications 1 à 11, à une installation d'étuvage en "canopy" (92), caractérisée en ce que le brin actif (96) des transporteurs (8, 9) et avantageusement aussi le brin de retour (97) suivent un cheminement sinueux vertical dans le tunnel (93) de l'étuve, cheminement qui correspond au tracé sinueux vertical de ce tunnel.

## Patentansprüche

1. Vorrichtung zum Transport diverser Produkte wie Kraftfahrzeugkarosserien in einem Behandlungsraum auf einem gewundenen Weg zwischen zwei Ebenen, wobei diese Vorrichtung zwei Schwebeförderer (8, 9) umfaßt, die sich auf vertikalen Ebenen beidseits der bewegten Produkte (4) erstrecken und über Schwenkstangen (41) verfügen, wobei die Stangen des aktiven Seils (19) jedes Förderers unten paarweise durch ein aushängbares Gestell (42) verbunden sind, das sich zwischen beiden Förderern erstreckt, um mindestens ein solches Produkt zu tragen und dieses in den abschüssigen Bereichen (27, 28) des Transportwegs geneigt zu halten, wobei die unteren Enden der Stangen (41) außerdem mit den äußeren Schrägrampen (56, 57; 59, 60) zusammenarbeiten können, die durch einen Führungsweg (61; 62) miteinander verbunden sind, der unter dem Rücklaufseil (20) jedes Förderers liegt, um die genannten Stangen niederzulegen und niederzuhalten und sie wieder aufzurichten, was den Platzbedarf des entsprechenden Förderers mit seinen Stangen reduziert,
dadurch gekennzeichnet, daß
- das Rücklaufseil (20) jedes Förderers (8, 9) über dem aktiven Seil (19) des jeweiligen Förderers verläuft,
- und jede Stange (41) einen Absatz (46) aufweist, mit Hilfe dessen der untere Teil (44) derselben gegenüber dem oberen Teil (43) quer zur Verschiebung der betrachteten Stange verschoben werden kann, damit sich die Stangen an den Enden jedes Förderers niederlegen und zum Rücklaufseil (20) gelangen oder sich wieder aufrichten können, wenn sie dieses Seil verlassen, ohne die Stangen des darunter laufenden aktiven Seils (19) zu berühren.

2. Vorrichtung gemäß Anspruch 1, dadurch gekennzeichnet, daß jeder Förderer ein Förderer des Typs ist, der die Kurven nur in einer zu seiner Laufrichtung senkrechte Richtung nimmt.

3. Vorrichtung gemäß Anspruch 1, dadurch gekennzeichnet, daß das untere Ende jeder Stange (41) aus einem Stück mit einem Drehzapfen (51) mit einer Hohlkehle (53) ist, in die einer der vier Haken (54) mit vorspringender Innenrippe (55) eines der Traggestelle (42) greifen kann, um die Aufhängung des jeweiligen Gestells nur während des Transportwegs zu sichern.

4. Vorrichtung gemäß Anspruch 3, dadurch gekennzeichnet, daß jeder Aufhängehaken (54) eines Traggestells (42) eine versenkbare Vorrichtung (67) aufweist, die sich automatisch an einem Drehzapfen (51) einer Stange (41) festmacht, und zwar durch die Abwärtsbewegung des jeweiligen Gestells an einer Beladestation (23), und sich vom jeweiligen Drehzapfen durch eine feste Schrägrampe (90) wieder löst, die an einer Entladestation (24) vorgesehen ist.

5. Vorrichtung gemäß Anspruch 4, dadurch gekennzeichnet, daß die versenkbare Befestigungsvorrichtung (67) aus einem ausschwenkbaren Hebel (79) (in 80) an jedem Aufhängehaken (54) besteht und durch eine Öffnung (82) desselben geführt wird, um in deren U-förmiges Lager (83) zu münden, und zwar mit einem Vorderstück (84), das eine untere Schrägrampe (86) zum Versenken aufweist, die an der Beladestation mit einen Drehzapfen (51) zusammenarbeiten kann, sowie eine obere Befestigungsnocke (85), die das Lager verschließen kann, wobei der Hebel durch eine C-förmige Stange (87) verlängert und mit einem Ausgleichsgegengewicht (88) versehen wird, das das Vorderstück (84) in das Lager springen läßt, wobei diese Stange außerdem an der Entladestation (24) mit der vorgenannten festen Schrägrampe (90) zum Versenken des Vorderstücks zusammenarbeiten kann.

6. Vorrichtung gemäß Anspruch 5, dadurch gekennzeichnet, daß sie mit Hebetischen (68, 71) funktioniert, die mit selbstfahrenden Laufbahnen (69, 72) versehen und an der Beladestation (23) und Entladestation (24) vorgesehen sind, wobei der Hebetisch (68) der Beladestation (23) eine Zwischenposition einnimmt, in der der Drehzapfen (51) jeder Stange (41) unter den Hinterflügel (78) jedes Hakens (54) des Traggestells geht, das sich an dieser Station befindet, jedoch mit dem erhöhten Vorderflügel (77) des jeweiligen Hakens zusammentrifft.

7. Vorrichtung gemäß Anspruch 1, dadurch gekennzeichnet, daß sie auf mindestens einem Teil ihres Transportwegs und besonders an einer Beladestation (23) über eine Vorrichtung verfügt, die das Schwenken der Stangen (41) verhindert.

8. Vorrichtung gemäß den Ansprüchen 6 und 7, dadurch gekennzeichnet, daß die das Schwenken der Stangen (41) verhindernde Vorrichtung aus einer Längsplatte (74) besteht, die senkrecht zu jeder Stange verläuft, mit der sie zusammenhängt, wobei die Platte einer festen Laufbahn (75, 76) folgt.

9. Vorrichtung gemäß Anspruch 3, bei der jeder Förderer (8, 9) eine Förderkette (10) aufweist, die sich zwischen zwei festen Schienen (16, 17) erstreckt, die für die Führung von Rollen (14, 15) vorgesehen sind, die beweglich um Achsen (13) montiert sind, die die Glieder (11, 12) der Kette miteinander verbinden, dadurch gekennzeichnet, daß die Ketten (10) auf zwei Paar Zahnräder (29) gleichen Durchmessers aufgerollt sind, wobei eine drehende Antriebsvorrichtung (34 bis 39) und eine Spannvorrichtung (40) mit mindestens einem dieser Radpaare zusammenarbeitet, sowie dadurch, daß jede Stange (41) zwei Elemente (43, 44) aufweist, deren Länge deutlich gleich ist und unter dem Durchmesser der Räder (29) liegt, und die durch ein quer verlaufendes Abstandsstück (46) miteinander verbunden sind, das das untere Element (44), wenn die entsprechende Stange an der Entladestation (24) das Paar Zahnräder überquert, vom oberen Element (43) der Stange weghält, die an dieser Station über das untere, aktive Seil (19) des jeweiligen Förderers ankommt, und, wenn die entsprechende Stange an der Beladestation (23) das Paar Zahnräder überquert, vom oberen Element (43) der Stange weghält, die von dieser Station über das untere, aktive Seil des jeweiligen Förderers abgeht.

10. Vorrichtung gemäß Anspruch 9, dadurch gekennzeichnet, daß jeder Drehzapfen (51) einen Vorsprung (58) aufweist, der zurückspringend vom unteren Element (44) der Stange (41) sitzt, und zwar auf der gleichen Seite, auf der dieses untere Element gegenüber dem oberen Element (43) einen Absatz aufweist, wobei dieser Vorsprung auf die äußeren Schrägrampen (56, 57, 59, 60) gleiten und dort ruhen soll, um die entsprechende Stange niederzulegen und wiederaufzurichten, wenn sie hier ankommt, ebenso wie auf dem Führungsweg (61, 62), der die Rampen miteinander verbindet, um die Stange niederzuhalten.

11. Vorrichtung gemäß einem der Ansprüche 1 bis 10, dadurch gekennzeichnet, daß jedes Traggestell (42) mindestens zwei Längsträger (63) mit abgeschrägten Enden (64) aufweist, die auf den Rollentransportvorrichtungen der Anlage aufliegen sollen, in der die Vorrichtung installiert wird, wobei diese Längsträger über mindestens zwei Querträger (66) verbunden sind, deren Enden über die vorstehend genannten Aufhängehaken (54) verfügen.

12. Vorrichtung gemäß einem der Ansprüche 1 bis 11, dadurch gekennzeichnet, daß die Anlage, in der diese Vorrichtung installiert wird, mindestens eine Behandlungswanne (2) aufweist, in der die beförderten Produkte (4) untertauchen müssen, sowie dadurch, daß mindestens das aktive Seil (19) der Förderer (8, 9) durch diese Einrichtung hindurchläuft, so daß die abschüssigen Bereiche (27, 28) des Transportwegs, den dieses aktive Seil zurücklegt, die Gestelle und die darauf liegenden Produkte wie beispielsweise Kraftfahrzeugkarosserien in das Bad (3) der Wanne (2) eintauchen und wieder herausziehen, wobei die Stangen (41) immer außerhalb des Raums, in dem die Produkte befördert werden, und seiner senkrechten Verlängerung darüber zirkulieren.

13. Anwendung der Vorrichtung gemäß einem der Ansprüche 1 bis 11, in einer Kataphorese-Anlage (1), dadurch gekennzeichnet, daß das aktive Seil (19) der Förderer (8, 9) im Tunnel (5) der Anlage verläuft, indem es in einer Entfernung dem Boden (7) desselben sowie dem Boden mindestens einer Behandlungswanne (2) folgt, während das Rücklaufseil (20) der Förderer außerhalb des Tunnels (5) oberhalb seiner Decke (6) verläuft.

14. Anwendung der Vorrichtung gemäß einem der Ansprüche 1 bis 11, in einer Ofentrocknungs-Anlage in "Canopy" (92), dadurch gekennzeichnet, daß das aktive Seil (96) der Förderer (8, 9) und vorteilhafterweise auch das Rücklaufseil (97) einem senkrechten, gewundenen Lauf im Tunnel (93) des Trockenofens folgen, ein Lauf, der der senkrechten, gewundenen Form dieses Tunnels entspricht.

## Claims

1. Device for transporting various products, such as motor vehicle bodies, in a treatment area which follows a meandering path between two levels, this device comprising two aerial conveyors (8, 9) which extend in vertical planes either side of the moving products (4) and are equipped with swivel arms (41), the arms of the active side (19) of each conveyor being connected in pairs at the bottom by a detachable frame (42) which extends between the two conveyors to support at least one such product and tilt it in the sloping parts (27, 28) of the path, the bottom ends of the arms (41) also being capable of cooperating with sloping ramps at the ends (56, 57; 59, 60) connected by a guideway (61; 62) arranged under the return side (20) of each conveyor, to set down the said arms, keep them set down and set them upright again, thus reducing the space required for the conveyor in question together with its arms,
characterised in that :
- the return side (20) of each conveyor (8, 9) is above the active side (19) of the conveyor in question,
- and each arm (41) has a crank (46) which enables the bottom part (44) of the arm in question to be offset transversely to the displacement of that arm, with respect to the top part (43) so that at the ends of each conveyor, the arms may be set down when they rejoin the return side (20) or set upright again when they leave this side without meeting the arms on the active side (19) travelling along below.

2. Device according to Claim 1, characterised in that each conveyor is of the type that takes curves in one direction perpendicular to its direction of travel.

3. Device according to Claim 1, characterised in that the bottom end of each arm (41) is integral with a pin (51) with a groove (53) which is capable of cooperating with one of the four hooks (54) with internal projecting rib (55) on one of the carrier frames (42) to suspend the selected frame for the distance travelled only.

4. Device according to Claim 3, characterised in that each suspension hook (54) on a carrier frame (42) has a retractable device (67) which is automatically controlled, as regards locking it onto an arm (41) pin (51), by the descent of the frame in question to a loading station (23) and, as regards unlocking it from the pin in question, by a fixed sloping ramp (90) located at an unloading station (24).

5. Device according to Claim 4, characterised in that the retractable locking device (67) is a lever (79) which is hinged (at 80) to each suspension hook (54) and passes through a port (82) in this to emerge into its U-shaped housing (83) in the form of a catch (84) which has a lower inclined retraction slope (86) which can cooperate at the loading station with a pin (51) and an upper locking cam (85) capable of closing the housing, the lever being prolonged by a C-shaped rod (87) fitted with a balance counterweight (88) which tends to make the catch (84) project in the housing, this rod also being capable of cooperating with the above-mentioned fixed sloping ramp (90) at the unloading station (24) to set back the catch.

6. Device according to Claim 5, characterised in that it cooperates with lifting tables (68, 71) equipped with automotive roller tracks (69, 72) located at the loading station (23) and the unloading station (24), the lifting table (68) at the loading station (23) having an intermediate position in which the pin (51) on each arm (41) passes under the rear wing (78) of each of the hooks (54) on the carrier frame which is at this station but contacts the higher front wing (77) of the hook in question.

7. Device according to Claim 1, characterised in that it comprises, in one part at least of its travel and particularly at a loading station (23), a device which opposes the swivelling of the arms (41).

8. Device according to Claims 6 and 7, characterised in that the device which opposes the swivelling of the arms (41) consists of a longitudinal plate (74) which is perpendicular to each arm with which it is integral, the plate cooperating with a fixed roller track (75, 76).

9. Device according to Claim 3, in which each conveyor (8, 9) comprises an endless chain (10) between two fixed rails (16, 17) provided to guide rollers (14, 15) mounted loose round pins (13) which connect the links (11, 12) of the chain, characterised in that the chains (10) are wound round two pairs of toothed wheels (29) of the same diameter, a rotational drive device (34 to 39) and a tension device (40) cooperating with at least one of these pairs of wheels and in that each arm (41) has two elements (43, 44) whose lengths are substantially equal and shorter than the diameter of the wheels (29) and which are joined by a transverse cross-piece (46) which, when the arm in question passes the pair of toothed wheels at the unloading station (24), puts the lower element (44) out of contact with the upper element (43) of the arm which reaches this station via the lower active side (19) of the corresponding conveyor and, when the arm in question passes the pair of toothed wheels at the loading station (23), out of contact with the upper element (43) of the arm which leaves this station via the lower active side of the corresponding conveyor.

10. Device according to Claim 9, characterised in that each pin (51) has a projection (58) which is set back from the lower element (44) of the corresponding arm (41), on the same side as this lower element with respect to the upper element (43), this projection being intended to come to rest by sliding onto the sloping ramps at the ends (56, 57, 59, 60) to set down and set upright the arm in question when it reaches that point, as well as on the guideway (61, 62) which connects these ramps, to keep the arm set down.

11. Device according to any one of Claims 1 to 10, characterised in that each carrier frame (42) comprises at least two spars (63) with raised ends (64), intended to rest on the roller conveyor units of the installation in which the device is used, these spars being connected by at least two cross-pieces (66), the ends of which are equipped with the above-mentioned suspension hooks (54).

12. Device according to any one of Claims 1 to 11, characterised in that the installation in which this device is used comprises at least one treatment tank (2) in which the conveyed products (4) are to be immersed and in that at least the active side (19) of the conveyors (8, 9) passes through this installation so that the sloping parts (27, 28) of the path brought about by this active side cause the frames and the products they are carrying, such as motor vehicle bodies, to be immersed in the bath (3) of the tank (2) and be removed from it, the arms (41) still moving outside the space in which the products are travelling and the vertical extension of this space which is above.

13. Application of the device according to any one of Claims 1 to 11 to an electrophoresis installation (1), characterised in that the active side (19) of the conveyors (8, 9) goes into the tunnel (5) of the installation by following the bottom (7) of it at a distance as well as the bottom of at least one treatment tank (2), whilst the return side (20) of the conveyors is outside the tunnel (5) above its roof (6).

14. Application of the device according to any one of Claims 1 to 11, to a "canopy" stoving installation (92), characterised in that the active side (96) of the conveyors (8, 9) and advantageously also the return side (97) follow a vertical meandering path in the tunnel (93) of the stove, a path which corresponds to the vertical meandering layout of this tunnel.
